# EUROPEAN PATENT APPLICATION

(11) **EP 4 807 557 A1**
(43) Date of publication of application: **16.09.2026**
(21) Application number: 24887512.2
(22) Date of filing: 06.08.2024
(51) Int. Cl.: G06F 11/07, H04L 43/10

(54) **FAULT LOG STORAGE METHOD, APPARATUS AND SYSTEM**

(30) Priority: 10.11.2023 CN 202311502284
(71) Applicant: Yinwang Intelligent Technologies Co., Ltd., Shenzhen, Guangdong 518110 (CN)
(72) Inventor: WU, Shiliang, Shenzhen, Guangdong 518129 (CN); ZHOU, Jieqi, Shenzhen, Guangdong 518129 (CN); CHEN, Weibiao, Shenzhen, Guangdong 518129 (CN)
(74) Representative: Henselmann, Alexander Gerhard
(86) International application number: PCT/CN2024/110138
(87) International publication number: WO 2025/097890

(57) **Abstract**

This application discloses a fault log storage method, apparatus, and system, and relates to the field of security technologies, which can store a fault log of a device in a non-volatile storage medium in a timely manner. The method includes: A first device proactively sends a device log to another device, and temporarily stores a device log from the another device. When one device becomes faulty or is subject to external adverse impact, the another device can store a fault log of the device in a non-volatile storage medium. Both the first device and the another device may be vehicle-mounted devices or industrial intelligent devices.

## Description

This application claims priority to Chinese Patent Application No. 202311502284.X, filed with the China National Intellectual Property Administration on November 10, 2023 and entitled "FAULT LOG STORAGE METHOD, APPARATUS, AND SYSTEM", which is incorporated herein by reference in its entirety.

### TECHNICAL FIELD

This application relates to the field of security technologies, and in particular, to a fault log storage method, apparatus, and system.

### BACKGROUND

With development of science and technology, devices have more functions. For example, as the automobile industry develops toward "electrification", "connectivity", "intelligence", and "sharing", vehicle functions are increasing, and corresponding software and hardware that support these functions are increasingly complex as well. When an in-vehicle system is under test or running, a vehicle-mounted device may be faulty. In this case, a log system can record and store a corresponding fault log. Then, a fault can be quickly located and resolved by analyzing the log of the vehicle-mounted device. However, when the vehicle-mounted device becomes faulty or is subject to external adverse impact, the vehicle-mounted device may fail to store the fault log of the vehicle-mounted device in a non-volatile storage medium, resulting in loss of the fault log.

### SUMMARY

This application provides a fault log storage method, apparatus, and system, which can store a fault log of a device in a non-volatile storage medium in a timely manner.

To achieve the foregoing objective, this application provides the following technical solutions.

According to a first aspect, this application provides a fault log storage method. The method is performed by a first device, and the method includes: listening for a heartbeat packet of a second device, where the heartbeat packet of the second device is used to determine whether the second device is faulty; obtaining a first log of the second device; when the first device obtains a first heartbeat packet of the second device, storing the first log of the second device in a memory of the first device; and after storing the first log of the second device in the memory of the first device, if the first device does not obtain a second heartbeat packet of the second device, storing the first log of the second device in a non-volatile storage medium.

In this way, when the second device becomes faulty, a fault log of the second device can be stored in the non-volatile storage medium in a timely manner, and is not limited by an external network, to reduce a risk of loss of the fault log, and subsequently locate and resolve a fault quickly.

In a possible implementation, the method further includes: The first device sends a first log and a heartbeat packet of the first device. The first log and the heartbeat packet may be sent in a unicast, multicast, or broadcast manner.

In a possible implementation, the first device includes one or more devices.

In this way, the fault log of the second device can be stored in memories of a plurality of devices. When the second device becomes faulty, the plurality of devices can store the fault log of the second device in the non-volatile storage medium, to further reduce the risk of loss of the fault log.

In a possible implementation, before storing the first log of the second device in the memory of the first device, the method further includes: verifying the first log of the second device; and when the verification succeeds, storing the first log of the second device in the memory of the first device; or when the verification fails, sending a first message to the second device, where the first message indicates the second device to a log of the second device.

In this way, integrity and security of the first log can be ensured.

In a possible implementation, before storing the first log in the memory of the first device, the method further includes: deleting a second log of the second device from the memory, where the second log is a log of the second device received before the first log.

In this way, a memory resource of the first device can be saved. In addition, the second log of the second device can be updated to a latest obtained first log of the second device, to improve accuracy of log-based fault determining.

In a possible implementation, the first log includes one or more log frames, and each log frame includes a log generated within specified duration or a log of a specified size.

When the first log includes one log frame, the memory resource of the first device can be saved.

When the first log includes a plurality of log frames, log integrity can be ensured, thereby preventing log information from being missing.

In a possible implementation, the first device and the second device are vehicle-mounted devices, the first device and the second device are home devices, or the first device and the second device are industrial devices.

In a possible implementation, the non-volatile storage medium is located outside the first device, or the first device includes the non-volatile storage medium.

According to a second aspect, this application provides a fault log storage system. The system includes a first device and a second device. The second device is configured to send a first log and a heartbeat packet of the second device. The first device is configured to listen for the heartbeat packet of the second device, where the heartbeat packet of the second device is used to determine whether the second device is faulty. The first device obtains the first log of the second device, and when obtaining a first heartbeat packet of the second device, the first device stores the first log of the second device in a memory of the first device. After the first log of the second device is stored in the memory of the first device, if the first device does not obtain a second heartbeat packet of the second device, the first device stores the first log of the second device in a non-volatile storage medium. A sending manner may be unicast, multicast, or broadcast.

In a possible implementation, the first device is further configured to send a first log and a heartbeat packet of the first device.

In a possible implementation, the first device includes one or more devices.

In a possible implementation, the first device is further configured to: before storing the first log of the second device in the memory of the first device, verify the first log of the second device; and when the verification succeeds, store the first log of the second device in the memory of the first device; or when the verification fails, send a first message to the second device, where the first message indicates the second device to send a log of the second device. The second device is further configured to send the log of the second device based on the first message.

In a possible implementation, the first device is further configured to: before storing the first log in the memory of the first device, delete a second log of the second device from the memory, where the second log is a log of the second device received before the first log.

In a possible implementation, the first log includes one or more log frames, and each log frame includes a log generated within specified duration or a log of a specified size.

In a possible implementation, the first device and the second device are vehicle-mounted devices, the first device and the second device are home devices, or the first device and the second device are industrial devices.

In a possible implementation, the non-volatile storage medium is located outside the first device, or the first device includes the non-volatile storage medium.

According to a third aspect, this application provides a fault log storage apparatus, used in a first device. The fault log storage apparatus includes: a sending module, configured to send a first log and a heartbeat packet of the first device; a receiving module, configured to listen for a heartbeat packet of a second device, where the heartbeat packet of the second device is used to determine whether the second device is faulty, and the receiving module is further configured to obtain a first log of the second device; and a processing module, configured to store the first log of the second device in a memory of the first device when the first device obtains a first heartbeat packet of the second device, where after the first log of the second device is stored in the memory of the first device, if the first device does not obtain a second heartbeat packet of the second device, the processing module is further configured to store the first log of the second device in a non-volatile storage medium.

According to a fourth aspect, this application provides a vehicle, including the system according to any one of the second aspect.

According to a fifth aspect, this application provides a computer-readable storage medium. The computer-readable storage medium includes a computer program or instructions. When the computer program or the instructions are run on a fault log storage system, the fault log storage system according to the second aspect is enabled to perform the method according to the first aspect.

According to a sixth aspect, this application provides a computer program product. The computer program product includes a computer program or instructions. When the computer program or the instructions are run on a computer, the computer is enabled to perform the method according to the first aspect.

According to a seventh aspect, this application provides a chip system, including a processor. The processor is configured to invoke, from a memory, a computer program stored in the memory and run the computer program, to perform the method according to any one of the implementations of the first aspect.

For technical effect corresponding to the second aspect to the seventh aspect and any one implementation of the second aspect to the seventh aspect, refer to the technical effect corresponding to the first aspect and any one of implementations of the first aspect. Details are not described herein again.

### BRIEF DESCRIPTION OF DRAWINGS

FIG. 1 is a diagram of a system for a fault log storage method according to an embodiment of this application;
FIG. 2A is a diagram of a system of a vehicle according to an embodiment of this application;
FIG. 2B is a diagram of a system of another vehicle according to an embodiment of this application;
FIG. 3 is a schematic flowchart of a fault log storage method according to an embodiment of this application;
FIG. 4 is a schematic flowchart of another fault log storage method according to an embodiment of this application;
FIG. 5 is a diagram of a first log according to an embodiment of this application;
FIG. 6 is a diagram of receiving time of logs and heartbeat packets according to an embodiment of this application; and
FIG. 7 is a diagram of a structure of a fault log storage system according to an embodiment of this application.

### DESCRIPTION OF EMBODIMENTS

Terms "includes", "have", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, terms such as "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

In the descriptions of embodiments of this application, "a plurality of" means two or more, unless otherwise specified. In this specification, "and/or" describes only an association relationship between associated objects and indicates that three relationships may exist. For example, A and/or B may indicate the following three cases: Only A exists, both A and B exist, and only B exists.

Features, structures, or characteristics in this application may be combined in one or more embodiments in any appropriate manner. Sequence numbers of the processes do not mean execution sequences in various embodiments of this application. The execution sequences of the processes should be determined based on functions and internal logic of the processes, and should not be construed as any limitation on implementation processes in embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, for identical or similar parts in embodiments, refer to each other. In various embodiments of this application, unless otherwise specified or there is a logic conflict, terms and/or descriptions in different embodiments are consistent and may be referenced by each other. Technical features in different embodiments may be combined to form a new embodiment based on an internal logical relationship. Implementations of this application are not intended to limit the protection scope of this application.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

A vehicle is used as an example. When a vehicle-mounted device runs, a log system may store log data in a buffer of a memory in real time. When the vehicle-mounted device becomes faulty, an in-vehicle operating system may write log data cached in a memory to a non-volatile storage medium (for example, a disk), to store a fault log. However, when a system-level fault occurs in the vehicle-mounted device, the fault log in the memory may directly disappear when an in-vehicle system is powered off, and fail to be properly written to a storage (written to the non-volatile storage medium). Alternatively, when the vehicle-mounted device is subject to external adverse impact, for example, is affected by a network intrusion, the fault log in the memory may fail to be properly written to a storage, resulting in fault log loss.

In a related technology, a fault log recording method is provided. After a fault occurs, a fault log is sent in fragments. When starting to receive the log, a management controller sends an interrupt to a CPU, to prompt the CPU to continue to send a second log fragment, thereby shortening a time interval for sending two log fragments. However, this manner only reduces a log sending time and cannot protect the log.

A log management method for a vehicle application is further provided. A log encryption library, a first file area, and a trust area are set in a vehicle-mounted electrical element (telematics box, T-BOX), a key is generated in the trust area, a log file is encrypted by using key information, and the encrypted log file is stored in the first file area, to prevent an attacker from snooping on program private data through a log. This method only encrypts the log and cannot resolve a problem of log loss.

A method for obtaining an in-vehicle log by a server is further provided. A T-BOX obtains a remote in-vehicle log capture command from an external network, performs different capture strategies based on a same command type, and constructs a reliable and effective log capture communication link based on a captured log, which facilitates analysis, determining, and troubleshooting of a vehicle fault. This method uses an external server to capture the log, which relies on the external network and is complex to operate. In addition, when a system-level fault occurs in a device, a fault log may not be captured by the external server in a timely manner, and the fault log still has a risk of loss.

A method for analyzing an in-vehicle log of a train signal system based on a distributed architecture is further provided. All operation logs of a train are sent to a server side, and all log information is analyzed by an algorithm to determine a train operating status. This method processes all logs in a distributed manner and relies on an external network for transmission. When a system-level fault occurs in a device, a fault log cannot be sent to the external network in a timely manner, and the fault log still has a risk of loss.

To resolve the foregoing problems, an embodiment of this application provides a fault log storage method. In this method, a plurality of vehicle-mounted devices perform locally distributed fault log storage. Each vehicle-mounted device proactively sends a device log to another vehicle-mounted device, and temporarily stores a device log from the another vehicle-mounted device. When one vehicle-mounted device becomes faulty or is subject to external adverse impact, the another vehicle-mounted device can store a fault log of the vehicle-mounted device in a non-volatile storage medium.

In this way, when the vehicle-mounted device becomes faulty, the fault log of the vehicle-mounted device can be stored in the non-volatile storage medium in a timely manner, and is not limited by an external network, to reduce a risk of loss of the fault log with minimized computation and storage consumption, and subsequently locate and resolve a fault quickly.

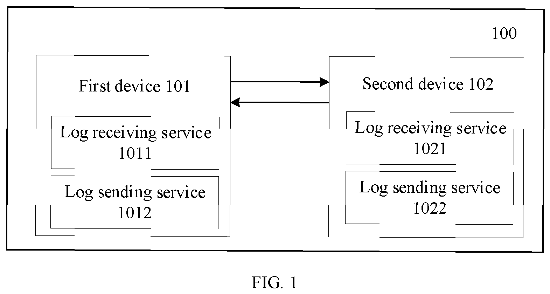

FIG. 1 is a diagram of an architecture of a system according to an embodiment of this application. As shown in FIG. 1, the system 100 includes a first device 101 and a second device 102. The first device 101 has a specific computing and storage capability.

The system 100 may be an in-vehicle system, and the first device 101 and the second device 102 are vehicle-mounted devices. For example, the first device 101 and the second device 102 may be vehicle-mounted devices such as a cockpit domain controller (cockpit domain controller, CDC), a vehicle domain controller (vehicle domain controller, VDC), and a mobile data center controller (mobile data-center controller, MDCC). The first device 101 and the second device 102 may alternatively be other vehicle-mounted devices. In one or more embodiments of this application, the first device and the second device may be devices in a same form or different forms.

Optionally, the system 100 may alternatively be a home system, and the first device 101 and the second device 102 are home devices. For example, the first device 101 may be a home device such as a smart speaker or a smart router that has a specific computing and storage capability. The second device 102 may be a home device such as a smart router, a smart television, a smart speaker, a smart light, or a scanner. The first device 101 and the second device 102 may alternatively be other home devices.

Optionally, the system 100 may alternatively be an industrial system, and the first device 101 and the second device 102 are industrial devices. For example, the first device 101 may be a programmable logic controller (programmable logic controller, PLC) or the like, and the second device 102 may be an industrial device such as a PLC, a lathe, or a milling machine. The first device 101 and the second device 102 may alternatively be other industrial devices.

It should be understood that the foregoing descriptions of the system 100 are merely an example. The system 100 may alternatively be a system of another type, and the first device 101 and the second device 102 may alternatively be devices of other types.

Optionally, the first device 101 includes a log receiving service 1011 and a log sending service 1012. The log receiving service 1011 is used to receive a log and a heartbeat packet from the second device 102. The log sending service 1012 is used to send a log and a heartbeat packet of the first device 101. Both the first device 101 and the second device 102 may send the log and the heartbeat packet in a unicast, multicast, or broadcast manner.

Optionally, there may be a plurality of log receiving services 1011 in the first device 101, and each log receiving service 1011 receives a log and a heartbeat packet of one second device 102.

Optionally, there may be one log receiving service 1011 in the first device 101, and one log receiving service 1011 receives logs and heartbeat packets of a plurality of second devices 102.

Optionally, when the first device 101 includes a plurality of devices, some devices in the first device 101 may include only the log sending service 1012, or some devices in the first device 101 may include only the log receiving service 1011.

Optionally, the second device 102 includes a log receiving service 1021 and a log sending service 1022. The log receiving service 1021 is used to receive the log and the heartbeat packet from the first device 101. The log sending service 1022 is used to broadcast the log and the heartbeat packet of the second device 102.

Optionally, there may be a plurality of log receiving services 1011 in the first device 101, and each log receiving service 1011 receives a log and a heartbeat packet of one second device 102.

Optionally, there may be one log receiving service 1011 in the first device 101, and one log receiving service 1011 receives logs and heartbeat packets of a plurality of second devices 102.

Optionally, when the second device 102 includes a plurality of devices, some devices in the second device 102 may include only the log sending service 1022, or some devices in the second device 102 may include only the log receiving service 1011.

Optionally, in this embodiment of this application, the system 100 may be in-vehicle system, and the first device 101 and the second device 102 are vehicle-mounted devices. The following describes the solutions of this application by using an example in which the first device 101 and the second device 102 are vehicle-mounted devices.

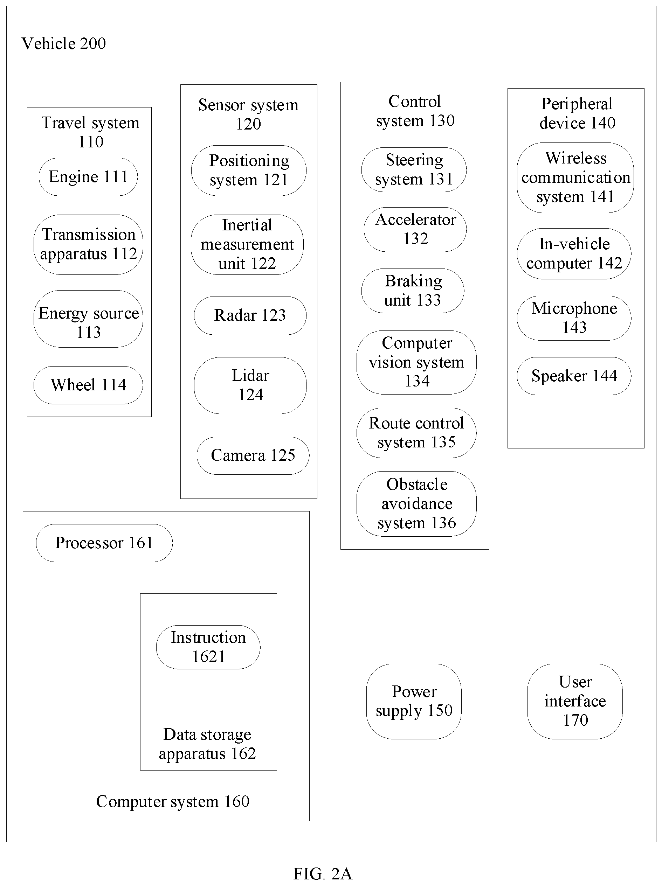

FIG. 2A is a diagram of a structure of a vehicle according to an embodiment of this application. The vehicle 200 may include various subsystems, for example, a travel system 110, a sensor system 120, a control system 130, one or more peripheral devices 140, a power supply 150, a computer system 160, and a user interface 170. Optionally, the vehicle 200 may include more or fewer subsystems, and each subsystem may include a plurality of elements. In addition, each subsystem and element of the vehicle 200 may be interconnected in a wired or wireless manner.

The travel system 110 may include a component that provides power for the vehicle 200 to move. In an embodiment, the travel system 110 may include an engine 111, a transmission apparatus 112, an energy source 113, and wheels 114. The engine 111 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 111 converts the energy source 113 into mechanical energy.

Examples of the energy source 113 include gasoline, diesel, other oil-based fuels, propane, other compressed gas-based fuels, ethanol, solar panels, batteries, and other power sources. The energy source 113 may also provide energy for another system of the vehicle 200.

The transmission apparatus 112 may transmit mechanical power from the engine 111 to the wheels 114. The transmission apparatus 112 may include a gearbox, a differential gear, and a drive shaft. In an embodiment, the transmission apparatus 112 may further include another component, for example, a clutch. The drive shaft may include one or more shafts that may be coupled to one or more wheels 114.

The sensor system 120 may include several sensors that sense information about an ambient environment of the vehicle 200. For example, the sensor system 120 may include a positioning system 121 (the positioning system may be a global positioning system (global positioning system, GPS), a BeiDou system, or another positioning system), an inertial measurement unit (inertial measurement unit, IMU) 122, a radar 123, a lidar 124, and a camera 125.

The positioning system 121 may be used to estimate a geographical location of the vehicle 200. The IMU 122 is configured to sense a location and an orientation change of the vehicle 200 based on an inertial acceleration. In an embodiment, the IMU 122 may be a combination of an accelerometer and a gyroscope.

The radar 123 may sense an object in the ambient environment of the vehicle 200 by using a radio signal. In some embodiments, in addition to sensing the object, the radar 123 may be further configured to sense a speed and/or an advancing direction of the object.

The lidar 124 may sense, by using a laser, an object in an environment in which the vehicle 200 is located. In some embodiments, the lidar 124 may include one or more laser sources, a laser scanner, one or more detectors, and another system component.

The camera 125 may be configured to capture a plurality of images of the ambient environment of the vehicle 200 and a plurality of images in a vehicle cockpit. The camera 125 may be a static camera or a video camera.

The control system 130 may control operations of the vehicle 200 and components of the vehicle 200. The control system 130 may include various elements, including a steering system 131, an accelerator 132, a braking unit 133, a computer vision system 134, a route control system 135, and an obstacle avoidance system 136.

The steering system 131 may be operated to adjust an advancing direction of the vehicle 200. For example, in an embodiment, the steering system may be a steering wheel system.

The accelerator 132 is configured to control an operating speed of the engine 111 and further control a speed of the vehicle 200.

The braking unit 133 is configured to control the vehicle 200 to decelerate. The braking unit 133 may use friction to slow down the wheels 114. In another embodiment, the braking unit 133 may alternatively convert kinetic energy of the wheels 114 into a current. Alternatively, the braking unit 133 may reduce a rotational speed of the wheels 114 in another form to control the speed of the vehicle 200. In this embodiment of this application, when the vehicle is braking or coasting, the vehicle operates under a high-power energy recovery condition.

The computer vision system 134 may process and analyze an image captured by the camera 125, to recognize an object and/or a feature in the ambient environment of the vehicle 200 and a body feature and a facial feature of a driver in the vehicle cockpit. The object and/or the feature may include a traffic signal, a road condition, and an obstacle, and the body feature and the facial feature of the driver include a behavior, a line of sight, an expression, and the like of the driver. The computer vision system 134 may use an object recognition algorithm, a structure from motion (structure from motion, SFM) algorithm, video tracking, and another computer vision technology. In some embodiments, the computer vision system 134 may be further used to draw a map for an environment, track an object, estimate a speed of the object, determine a driver behavior, perform facial recognition, and the like.

The route control system 135 is configured to determine a traveling route of the vehicle 200. In some embodiments, the route control system 135 may determine the traveling route of the vehicle 200 based on data from the sensor, the positioning system 121, and one or more predetermined maps.

The obstacle avoidance system 136 is configured to identify, evaluate, and avoid or bypass a potential obstacle in an environment of the vehicle 100 in another manner.

Certainly, in an example, the control system 130 may add or alternatively include components other than the components shown and described. Alternatively, some of the foregoing components may be removed.

The vehicle 200 interacts with an external sensor, another vehicle, another computer system, or a user by using the peripheral device 140. The peripheral device 140 may include a wireless communication system 141, an in-vehicle computer 142, a microphone 143, and/or a speaker 144.

In some embodiments, the peripheral device 140 provides a means for a user of the vehicle 200 to interact with the user interface 170. For example, the in-vehicle computer 142 may provide information for the user of the vehicle 200. The in-vehicle computer 142 may display an energy flow direction in an energy flow manner, or push energy-saving effect information. The user interface 170 may further operate the in-vehicle computer 142 to receive an input from the user. The in-vehicle computer 142 may perform an operation through a touchscreen. In another case, the peripheral device 140 may provide a means for the vehicle 200 to communicate with another device located in the vehicle. For example, the microphone 143 may receive audio (for example, a voice command or another audio input) from the user of the vehicle 200. Similarly, the speaker 144 may output audio to the user of the vehicle 200.

The wireless communication system 141 may wirelessly communicate with one or more devices directly or through a communication network. For example, the wireless communication system 141 may use 3G cellular communication such as CDMA, EVD0, or GSM/GPRS, 4G cellular communication such as LTE, or 5G cellular communication. The wireless communication system 141 may communicate with a wireless local area network (wireless local area network, WLAN) through Wi-Fi. In some embodiments, the wireless communication system 141 may directly communicate with a device by using an infrared link, Bluetooth, ZigBee, or another wireless protocol. For example, the wireless communication system 141 may include one or more dedicated short-range communication (dedicated short-range communication, DSRC) devices.

The power supply 150 may provide power to various components of the vehicle 200. In an embodiment, the power supply 150 may be a rechargeable lithium-ion or lead-acid battery. One or more battery packs of such a battery may be configured as a power supply to supply power to the various components of the vehicle 200. In some embodiments, the power supply 150 and the energy source 113 may be implemented together. In this embodiment of this application, the power supply 150 may be a lithium iron phosphate power battery. It should be understood that the power supply 150 may alternatively be another battery. This is not specifically limited in embodiments of this application.

Some or all of functions of the vehicle 200 are controlled by the computer system 160. The computer system 160 may include at least one processor 161. The processor 161 executes instructions 1621 stored in a non-transitory computer-readable medium such as a data storage apparatus 162. The computer system 160 may alternatively be a plurality of computing devices that control an individual component or a subsystem of the vehicle 200 in a distributed manner.

The processor 161 may be any conventional processor, such as a commercially available central processing unit (central processing unit, CPU). Alternatively, the processor may be a dedicated device such as an application-specific integrated circuit (application-specific integrated circuit, ASIC) or another hardware-based processor. Although FIG. 2A functionally shows the processor, a memory, and other elements in a same physical housing, a person of ordinary skill in the art should understand that the processor, the computer system, or the memory may actually include a plurality of processors, computer systems, or memories that may be stored in the same physical housing, or may include a plurality of processors, computer systems, or memories that are not stored in the same physical housing. For example, the data storage apparatus may be a hard disk drive or another storage medium located in a different physical housing. Therefore, a reference to the processor or the computer system is understood as including a reference to a set of processors, computer systems, or data storage apparatuses that can be operated concurrently, or a reference to a set of processors, computer systems, or data storage apparatuses that cannot be operated concurrently. Different from using a single processor to perform the steps described herein, some components such as a steering component and a deceleration component may have respective processor, and the processor performs only computation related to a component-specific function. For example, the processor 161 may be a non-volatile storage medium in this embodiment of this application.

In various aspects described herein, the processor may be located far away from the vehicle and wirelessly communicate with the vehicle. In another aspect, some processes described herein are performed on the processor disposed inside the vehicle, while others are performed by a remote processor, including performing a step necessary for single manipulation.

In some embodiments, the data storage apparatus 162 may include the instructions 1621 (for example, program logic), and the instructions 1621 may be executed by the processor 161 to perform various functions of the vehicle 200, including the functions described above. The data storage apparatus 162 may also include additional instructions, including instructions to send data to, receive data from, interact with, and/or control one or more of the travel system 110, the sensor system 120, the control system 130, and the peripheral device 140.

In addition to the instructions 1621, the data storage apparatus 162 may further store data, for example, a road map, route information, a position, a direction, a speed, and other vehicle data of the vehicle, and other information.

The user interface 170 is configured to provide information for or receive information from the user of the vehicle 200. Optionally, the user interface 170 may include an interface for one or more input/output devices in a set of peripheral devices 140 to interact and exchange information with the user. The one or more input/output devices in the set of peripheral devices 140 may be one or more of, for example, the wireless communication system 141, the in-vehicle computer 142, the microphone 143, and the speaker 144.

The computer system 160 may control the function of the vehicle 200 based on inputs received from various subsystems (for example, the travel system 110, the sensor system 120, and the control system 130) and the user interface 170.

Optionally, one or more of the foregoing components may be installed separately from or associated with the vehicle 200. For example, the data storage apparatus 162 may be partially or completely separated from the vehicle 200. The foregoing components may be communicatively coupled together in a wired and/or wireless manner.

Optionally, the foregoing components are merely examples. During actual application, components in the foregoing modules may be added or removed according to an actual requirement. FIG. 2A should not be construed as a limitation on embodiments of this application.

The vehicle 200 may be a car, a truck, a motorcycle, a bus, a ship, an airplane, a helicopter, a lawn mower, a recreational vehicle, a playground vehicle, a construction device, a trolley, a golf cart, a train, or the like. This is not specifically limited in embodiments of this application.

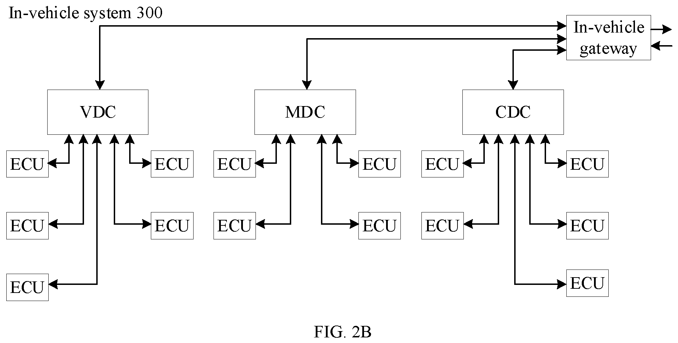

FIG. 2B is a diagram of an architecture of an in-vehicle system 300. The in-vehicle system 300 includes a vehicle-mounted device and an in-vehicle gateway. The vehicle-mounted device includes but is not limited to at least one of the following devices: a VDC, an MDC, and a CDC. Each vehicle-mounted device is connected to a plurality of electronic control units (electronic control unit, ECU). Optionally, vehicle-mounted devices VDC, MDC, and CDC may be devices in the control system 130 in the in-vehicle subsystem in FIG. 2A, and may control the plurality of electronic control units connected to the vehicle-mounted device.

Optionally, a first device may be a VDC, and a second device is an MDC and/or a CDC; a first device may be an MDC, and a second device is a VDC and/or a CDC; a first device may be a CDC, and a second device is a VDC and/or an MDC; a first device may be a VDC and/or a CDC, and a second device is an MDC; a first device may be an MDC and/or a CDC, and a second device is a VDC; a first device may be a VDC and/or an MDC, and a second device is a CDC; a first device may be a first VDC, and a second device is a second VDC; a first device may be a first MDC, and a second device is a second MDC; or a first device may be a first CDC, and a second device is a second CDC. This is not specifically limited in embodiments of this application.

Optionally, a plurality of vehicle-mounted devices may be connected to each other through the in-vehicle gateway, and perform information transmission with an external network.

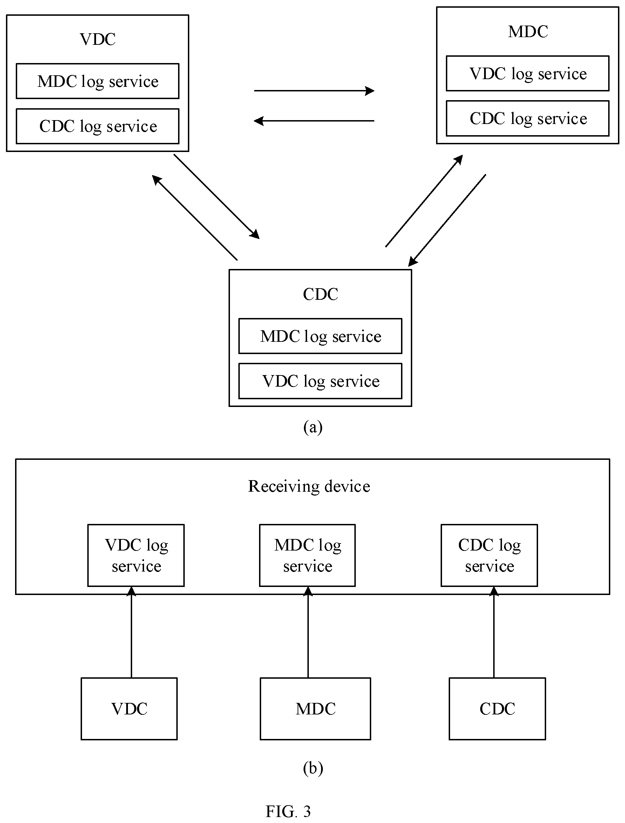

In an embodiment, as shown in (a) in FIG. 3, the vehicle-mounted devices VDC, MDC, and CDC may send and/or receive logs and heartbeat packets to each other.

The VDC includes an MDC log service and a CDC log service. The MDC includes a VDC log service and a CDC log service. The CDC includes a VDC log service and an MDC log service.

Optionally, the VDC log service is used to receive a log and a heartbeat packet from one or more VDCs. The MDC log service is used to receive a log and a heartbeat packet from one or more MDCs. The CDC log service is used to receive a log and a heartbeat packet from one or more CDCs.

Optionally, the vehicle-mounted device sends a log and a heartbeat packet to another vehicle-mounted device. When the vehicle-mounted device becomes faulty, the another vehicle-mounted device may store the log of the vehicle-mounted device in a non-volatile storage medium.

For example, the VDC sends a log and a heartbeat packet to the MDC and the CDC, and when the VDC becomes faulty, other vehicle-mounted devices MDC and CDC may store the log of the VDC in a non-volatile storage medium.

In another embodiment, as shown in (b) in FIG. 3, the vehicle-mounted devices VDC, MDC, and CDC may send logs and heartbeat packets to one separately disposed receiving device, and the receiving device receives the logs and the heartbeat packets from the VDC, the MDC, and the CDC.

Optionally, the receiving device includes a VDC log service, an MDC log service, and a CDC log service.

Optionally, the receiving device may be deployed in an independent system of a vehicle with a small computational load, for example, deployed in a black box or a single-chip microcomputer. The receiving device runs a minimum number of programs supporting system operation and a plurality of log receiving service programs. The vehicle-mounted device sends a log and a heartbeat packet to the receiving device, and does not need to send a log and a heartbeat packet to another vehicle-mounted device, so that memory space of the another vehicle-mounted device is saved. When the vehicle-mounted device becomes faulty, the receiving device may store the log of the vehicle-mounted device in a non-volatile storage medium.

For example, the receiving device may receive logs and heartbeat packets of the VDC, the MDC, and the CDC. When the receiving device does not receive the heartbeat packet of the VDC in a timely manner within a preset time, the receiving device determines that the VDC is faulty, and the receiving device may store the previously received log of the VDC in a non-volatile storage medium.

Optionally, in this embodiment of this application, an example in which the second device broadcasts a log and a heartbeat packet of the second device, and the first device receives the log and the heartbeat packet of the second device is used for description.

The first device may be at least one of the vehicle-mounted devices VDC, MDC, or CDC, or the first device may be one independent receiving device.

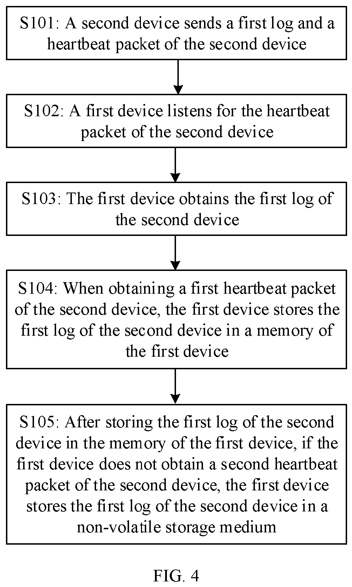

FIG. 4 is a schematic flowchart of a fault log storage method according to an embodiment of this application. The method includes steps S101 to S105.

S101: A second device sends a first log and a heartbeat packet of the second device.

The heartbeat packet may be used to determine whether the second device is faulty. When the second device runs normally, the second device may broadcast the heartbeat packet in real time. When the second device becomes faulty, the second device stops broadcasting the heartbeat packet.

Specifically, the second device may send the first log and the heartbeat packet of the second device in a unicast, multicast, or broadcast manner.

In this embodiment of this application, an example in which the second device broadcasts the first log and the heartbeat packet of the second device to an in-vehicle gateway is used for description.

Optionally, the second device may broadcast a log of the second device in real time.

Optionally, the second device may broadcast the heartbeat packet of the second device based on a fixed frequency. For example, the second device broadcasts one heartbeat packet every 5 seconds, or broadcasts one heartbeat packet every 10 seconds. A broadcast frequency of the heartbeat packet is not specifically limited in embodiments of this application.

Optionally, broadcast frequencies of the first log and the heartbeat packet may be the same or may be different. This is not limited in embodiments of this application.

S102: A first device listens for the heartbeat packet of the second device.

Optionally, the first device may listen for the heartbeat packet of the second device by using a log receiving service.

S103: The first device obtains the first log of the second device.

Optionally, the first device may receive the first log of the second device by using the log receiving service. The first device may include a plurality of log receiving services. One log receiving service corresponds to receiving a log and a heartbeat packet of one device.

Optionally, the first device may receive one or more log frames as the first log of the second device. In other words, the first log of the second device includes one or more log frames.

Each log frame includes a log generated within specified duration or a log of a specified size.

Optionally, when the log frame is a log generated within specified duration, the log frame may be a log whose time length is a unit length. For example, the log frame may be a log whose time length is within 1 second.

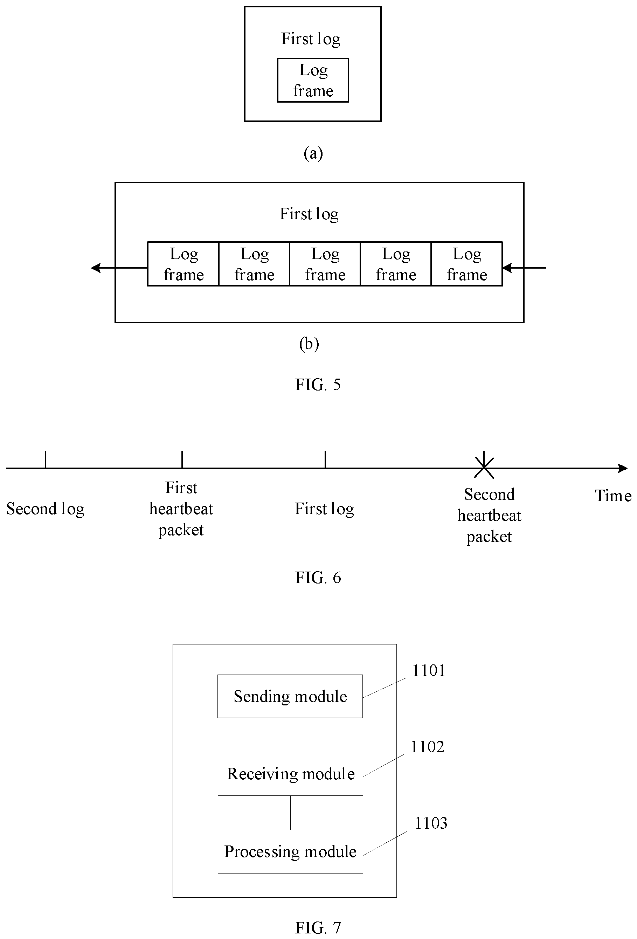

Optionally, as shown in (a) in FIG. 5, the first log may be one log frame. In this case, the first device determines that a log received within 1 second is the first log of the second device.

Optionally, as shown in (b) in FIG. 5, the first log may alternatively be a plurality of log frames. Specifically, when receiving a log of the second device, the first device determines a length of a current log queue, and when the length of the log queue reaches a log threshold, the first device determines that the plurality of log frames are the first log of the second device. Then, the plurality of log frames may be stored in a memory of the first device according to a first-in first-out principle.

For example, a log threshold may be five, and the first log may include five log frames. In this case, the first device determines that a log received within 5 seconds is the first log of the second device.

Optionally, when the log frame is a log of a specified size, the log frame may be a log of a unit size. For example, the log frame may be a log of 1 KB.

Optionally, as shown in (a) in FIG. 5, the first log may be one log frame. When a size of a log of the second device reaches 1 KB, the first device determines that the log of 1 KB is the first log of the second device.

Optionally, as shown in (b) in FIG. 5, the first log may alternatively be a plurality of log frames.

For example, the first log may include five log frames. In this case, the first device determines that the log of 5 KB is the first log of the second device.

Optionally, the first device may perform step S103 before step S102, or may perform step S103 after step S102. This is not limited in embodiments of this application.

S104: When obtaining a first heartbeat packet of the second device, the first device stores the first log of the second device in the memory of the first device.

Optionally, when the first device obtains the first heartbeat packet of the second device, which indicates that the second device runs normally, the first device may store the obtained first log of the second device in the memory of the first device.

For example, a time at which the first device obtains the first heartbeat packet and the first log of the second device may be shown in FIG. 6. A second log is a log of the second device previously obtained by the first device. A second heartbeat packet is a next heartbeat packet of the second device that is detected by the first device.

Optionally, when the memory of the first device stores the previously received second log of the second device, the first device may store the first log of the second device after deleting the second log of the second device. In this way, a memory resource of the first device can be saved. In addition, the second log of the second device can be updated to a latest obtained first log of the second device, to improve accuracy of log-based fault determining.

In an embodiment, before storing the first log of the second device, the first device may verify the first log of the second device.

Optionally, the first device may verify the first log of the second device in a verification manner such as hash verification or parity check, to verify whether the first log of the second device is tampered with, lost, or damaged.

Optionally, the first device may further verify the first log of the second device in another verification manner, for example, verify the first log of the second device in a hash check manner. A manner of verifying the first log of the second device is not specifically limited in embodiments of this application.

Optionally, if the verification of the first log of the second device succeeds, the first log of the second device is stored in the memory of the first device.

Optionally, when the verification of the first log of the second device fails, the first device may send a first message to the second device, where the first message may indicate the second device to send a log of the second device again.

Optionally, the first message may further indicate the second device to send a heartbeat packet of the second device again.

In another embodiment, when a time interval for the first device to receive the first log of the second device exceeds a first preset time, the first device may send a first message to the second device, to indicate the second device to send a log of the second device again.

For example, a first preset time may be 10 seconds. When the first device does not receive the first log of the second device within 10 seconds, the first device may send the first message to the second device.

In another embodiment, when obtaining the first log of the second device, the first device stores the first log of the second device in the memory of the first device.

In another embodiment, the first device further stores the first log of the second device in another medium (different from a non-volatile storage medium) of the first device or another device (a device other than the first device and the second device, for example, a separate storage device). This is not limited in embodiments of this application.

S105: After storing the first log of the second device in the memory of the first device, if the first device does not obtain the second heartbeat packet of the second device, the first device stores the first log of the second device in the non-volatile storage medium.

Optionally, when the first device does not obtain the second heartbeat packet of the second device, which indicates that the second device is faulty, the first device stores, in the non-volatile storage medium, the first log of the second device from memory. The first log of the second device includes a fault log of the second device. Then, maintenance personnel can quickly locate a fault of the second device based on the first log of the second device, to resolve a fault of the second device.

Optionally, when the first device does not receive the first log of the second device within a second preset time (that is, the first log of the second device is not received within preset duration), the first device may determine that the second device is faulty.

Specifically, after receiving the first heartbeat packet, if the first device does not detect the second heartbeat packet within the second preset time, the first device determines that the second device is faulty. Second preset time duration is greater than heartbeat packet sending period interval duration of the second device, and is determined according to an actual requirement.

For example, a heartbeat packet sending period of the second device is once every 10 seconds, and the second preset time may be 30 seconds. When the first device does not receive a next heartbeat packet of the second device within 30 seconds, the first device determines the second device is faulty, and stores, in the non-volatile storage medium, the first log of the second device from memory.

The non-volatile storage medium is a storage medium that does not lose data when or after a device is powered off. For example, the non-volatile storage medium may be a magnetic disk drive, a solid-state drive, or the like.

The non-volatile storage medium is located outside the first device, or the first device may include the non-volatile storage medium.

In this way, when a vehicle-mounted device becomes faulty, a fault log of the vehicle-mounted device can be stored in the non-volatile storage medium in a timely manner, to subsequently locate and resolve a fault quickly.

For example, in a case in which the first device is a VDC and an MDC, the second device is a CDC, and memories of the VDC and the MDC store a log of the CDC, when the CDC becomes faulty, the VDC and the MDC may store a fault log of the CDC in the non-volatile storage medium, the VDC stores a fault log of the CDC in the non-volatile storage medium, or the CDC stores a fault log of the CDC in the non-volatile storage medium. This is not limited in embodiments of this application.

In embodiments of this application, a fault log storage system may be divided into functional modules based on the foregoing method examples. When each functional module is obtained through division based on each corresponding function, FIG. 7 is a diagram of a possible structure of the fault log storage system in the foregoing embodiments. As shown in FIG. 7, the fault log storage system includes a sending module 1101, a receiving module 1102, and a processing module 1103. Certainly, the fault log storage system may further include another module, or the fault log storage system may include fewer modules. This is not limited in embodiments of this application.

The sending module 1101 is configured to send a first log and a heartbeat packet of a first device.

The receiving module 1102 is configured to listen for a heartbeat packet of a second device. The heartbeat packet of the second device is used to determine whether the second device is faulty. The receiving module is further configured to obtain a first log of the second device.

The processing module 1103 is configured to store the first log of the second device in a memory of the first device. Then, if the first device does not obtain a second heartbeat packet of the second device, the first device stores the first log of the second device in a non-volatile storage medium.

For a detailed working process of the foregoing system, refer to a corresponding process in the foregoing method embodiments. Details are not described herein again.

An embodiment of this application provides a computer-readable storage medium storing one or more programs. The one or more programs include instructions. When the instructions are executed by a computer, the computer is enabled to perform the fault log storage method described in steps S102 to S105.

An embodiment of this application further provides a computer program product including instructions. When the instructions run on a computer, the computer is enabled to perform the fault log storage method described in steps S102 to S105 in the foregoing embodiment.

The computer may be a general-purpose computer, a dedicated computer, a computer network, or another programmable apparatus. Computer instructions may be stored in the computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. In an application process, some or all of the units may be selected according to actual requirements to achieve the objectives of the solutions of embodiments.

The foregoing descriptions are merely specific implementations of this application, but are not intended to limit the protection scope of this application. Any variation or replacement within the technical scope disclosed in this application shall fall within the protection scope of this application.

## Claims

1. A fault log storage method, wherein the method is performed by a first device, and the method comprises:
listening for a heartbeat packet of a second device, wherein the heartbeat packet of the second device is used to determine whether the second device is faulty;
obtaining a first log of the second device;
when the first device obtains a first heartbeat packet of the second device, storing the first log of the second device in a memory of the first device; and
after storing the first log of the second device in the memory of the first device, if the first device does not obtain a second heartbeat packet of the second device, storing the first log of the second device in a non-volatile storage medium.

2. The method according to claim 1, wherein the method further comprises:
sending, by the first device, a first log and a heartbeat packet of the first device.

3. The method according to claim 1 or 2, wherein the first device comprises one or more devices.

4. The method according to any one of claims 1 to 3, wherein before storing the first log of the second device in the memory of the first device, the method further comprises:
verifying the first log of the second device; and
when the verification succeeds, storing the first log of the second device in the memory of the first device; or
when the verification fails, sending a first message to the second device, wherein the first message indicates the second device to send a log of the second device.

5. The method according to any one of claims 1 to 4, wherein before storing the first log in the memory of the first device, the method further comprises:
deleting a second log of the second device from the memory, wherein the second log is a log of the second device received before the first log.

6. The method according to any one of claims 1 to 5, wherein the first log comprises one or more log frames, and each log frame comprises a log generated within specified duration or a log of a specified size.

7. The method according to any one of claims 1 to 6, wherein
the first device and the second device are vehicle-mounted devices, the first device and the second device are home devices, or the first device and the second device are industrial devices.

8. The method according to any one of claims 1 to 7, wherein the non-volatile storage medium is located outside the first device, or the first device comprises the non-volatile storage medium.

9. A fault log storage system, comprising a first device and a second device, wherein
the second device is configured to send a first log and a heartbeat packet of the second device; and
the first device is configured to:
listen for the heartbeat packet of the second device, wherein the heartbeat packet of the second device is used to determine whether the second device is faulty;
obtain the first log of the second device;
when the first device obtains a first heartbeat packet of the second device, store the first log of the second device in a memory of the first device; and
after storing the first log of the second device in the memory of the first device, if the first device does not obtain a second heartbeat packet of the second device, store the first log of the second device in a non-volatile storage medium.

10. The system according to claim 9, wherein
the first device is further configured to send a first log and a heartbeat packet of the first device.

11. The system according to claim 9 or 10, wherein the first device comprises one or more devices.

12. The system according to any one of claims 9 to 11, wherein the first device is further configured to:
before storing the first log of the second device in the memory of the first device, verify the first log of the second device; and
when the verification succeeds, store the first log of the second device in the memory of the first device; or
when the verification fails, send a first message to the second device, wherein the first message indicates the second device to send a log of the second device; and
the second device is further configured to send the log of the second device based on the first message.

13. The system according to any one of claims 9 to 12, wherein the first device is further configured to:
before storing the first log in the memory of the first device, delete a second log of the second device from the memory, wherein the second log is a log of the second device received before the first log.

14. The system according to any one of claims 9 to 13, wherein the first log comprises one or more log frames, and each log frame comprises a log generated within specified duration or a log of a specified size.

15. The system according to any one of claims 9 to 14, wherein
the first device and the second device are vehicle-mounted devices, the first device and the second device are home devices, or the first device and the second device are industrial devices.

16. The system according to any one of claims 9 to 15, wherein the non-volatile storage medium is located outside the first device, or the first device comprises the non-volatile storage medium.

17. A fault log storage apparatus, used in a first device, and comprising:
a sending module, configured to send a first log and a heartbeat packet of the first device;
a receiving module, configured to listen for a heartbeat packet of a second device, wherein the heartbeat packet of the second device is used to determine whether the second device is faulty, and the receiving module is further configured to obtain a first log of the second device; and
a processing module, configured to store the first log of the second device in a memory of the first device when the first device obtains a first heartbeat packet of the second device, wherein after the first log of the second device is stored in the memory of the first device, if the first device does not obtain a second heartbeat packet of the second device, the processing module is further configured to store the first log of the second device in a non-volatile storage medium.

18. A vehicle, comprising the fault log storage system according to any one of claims 9 to 16.
